# EUROPÄISCHE PATENTSCHRIFT

(11) **EP 3 061 713 B1**
(45) Veröffentlichungstag und Bekanntmachung des Hinweises auf die Patenterteilung: **04.10.2017**
(21) Anmeldenummer: 16000403.2
(22) Anmeldetag: 18.02.2016
(51) Int. Cl.: B65G 69/28, B65G 69/00

(54) **LADESTATION MIT LADETOR UND LADERAMPE**
LOAD STATION WITH LOADING GATE AND LOADING RAMP
STATION DE CHARGE COMPRENANT UNE PORTE ET UNE RAMPE DE CHARGEMENT

(30) Priorität: 25.02.2015 DE 102015002460
(43) Veröffentlichungstag der Anmeldung: 31.08.2016
(73) Patentinhaber: BEUMER GmbH & Co. KG, 59269 Beckum (DE)
(72) Erfinder: Heitplatz, Heino, 48317 Drensteinfurt (DE)
(74) Vertreter: Philipp, Matthias

(56) Entgegenhaltungen:
- EP-A1- 2 206 664
- EP-A1- 2 465 796
- US-A1- 2003 145 535
- US-A1- 2005 028 723
- US-B1- 6 312 214

## Beschreibung

Die Erfindung betrifft eine Ladestation zum Be- oder Entladen von Ladeeinheiten wie LKW-Laderäume, Transportbehälter oder Wechselbehälter, bspw. von einem Fahrzeug wie Zugmaschine, Rangierfahrzeug, Anhänger o.ä. transportierten Wechselbehältern, mit einem zu öffnenden oder zu schließenden Ladetor, das oberhalb einer horizontalen Ladefläche einer Laderampe angeordnet ist und in einer geöffneten Stellung eine Toröffnung freigibt, mit einer an die Laderampe, insbesondere an einen Sockel der Laderampe, angrenzenden Rangierfläche, auf der eine Ladeeinheit abstellbar ist.

Derartige Ladestationen beinhalten aufgrund der Notwendigkeit, dass die horizontale Ladefläche der Laderampe in einer gewissen Höhe oberhalb der Rangierfläche angeordnet sein muss, ein Gefahrenpotential durch Absturz von Ladegut, Personen, Regalfahrzeugen o.ä. auf die Rangierfläche, wenn ein an die Laderampe angestellter LKW, Wechselbehälter o.ä. versehentlich während des Be- oder Entladevorgangs von der Laderampe entfernt oder durch Unachtsamkeit oder aus anderen Gründen in einem zu großen Abstand von der Laderampe abgestellt wird.

### Es gibt folgende Szenarien:

Wechselbehälter werden abgestellt durch ein Rangierfahrzeug, Zugfahrzeug oder einen Anhänger, wobei das Fahrzeug anschließend wegfährt, oder aber die Wechselbehälter werden abgestellt und die genannten Fahrzeuge verbleiben unter dem Wechselbehälter.

Sicherungsmittel wie sie zum Sichern von LKW, Trailern oder Anhängern bekannt sind, z.B. Unterlegkeile, können bei Wechselbehältern aufgrund der begrenzten Belastbarkeit von Wechselbehältern nicht eingesetzt werden. Eine Verriegelung an einem Gebäude ist nicht möglich, da die zu erwartenden Belastungen zu hoch wären. Aus dem Dokument EP2206664 A1 ist eine Ladestation nach dem Oberbegriff des Anspruchs 1 bekannt. Die Erfindung hat sich zur Aufgabe gestellt, eine gattungsgemäße Ladestation im Hinblick auf die vorstehend beschriebenen Gefahrensituationen zu verbessern. Erfindungsgemäß wird eine Ladestation nach Anspruch 1 vorgeschlagen.

Hierzu schlägt die Erfindung die Maßnahmen vor, dass an dem Ladetor ein Schließsensor angeordnet ist, mit dem eine geschlossene Stellung des Ladetors erfassbar ist, dass an der Laderampe in einem horizontalen Abstand voneinander zwei Näherungssensoren angeordnet sind, die bei Positionierung einer Ladeeinheit benachbart zu der Toröffnung eine Erfassung zulassen, ob sich die Ladeeinheit mit einer Ladeöffnung innerhalb eines festgelegten Toleranzbereichs relativ zu der Toröffnung befindet, und dass die Näherungssensoren, der Schließsensor und eine Ladetorsteuerung mit einer Steuerung verbunden sind, die eine Öffnung des Ladetors über die Ladetorsteuerung nur zulässt, wenn die Näherungssensoren eine Position der Ladeeinheit innerhalb des Toleranzbereichs erfassen und bei nicht geschlossenem Ladetor eine Wegfahrsperre der Ladeeinheit aktiviert und/oder ein Warnsignal ausgibt, wenn bei nicht geschlossenem Ladetor von mindestens einem Näherungssensor ein Verlassen des Toleranzbereichs durch die Ladeeinheit erfasst ist.

Damit ist gewährleistet, dass das Ladetor nur in einer sicheren Situation mit angestellter Ladeeinheit geöffnet werden kann und dass bei nicht geschlossenem Ladetor die Ladeeinheit an einer Wegfahrbewegung gehindert wird und/oder dass an das an dem Ladevorgang beteiligte Personal eine Warnung ergeht, sobald sich ohne Vorhandensein oder trotz Aktivierung einer Wegfahrsperre bei geöffnetem bzw. nicht vollständig geschlossenem Ladetor die Ladeeinheit über einen gewissen Toleranzbereich hinaus von der Laderampe entfernt und eine potentielle Gefahrensituation geschaffen wird.

Die Wegfahrsperre der Ladeeinheit kann extern bezüglich der Ladeeinheit ausgebildet sein, bspw. in Form einer Schranke oder einer aus der Rangierfläche ausfahrbaren Radblockierung, oder die Wegfahrsperre kann in der Ladeeinheit angeordnet sein, insbesondere in Form einer in der Regel bereits herstellerseitig im Fahrzeug eingebauten Sperre, die ein Starten des Antriebsmotors verhindert.

Die Näherungssensoren können auf einem beliebigen physikalischen Prinzip basieren, beispielsweise optisch, induktiv, mit Ultraschall oder mit mechanischen Tastern oder Schaltern.

Der Toleranzbereich in einer Richtung senkrecht zu einer Erstreckungsebene des Ladetors bzw. der Toröffnung kann bis zu 10 mm, 20 mm, 30 mm, 50 mm oder 100 mm betragen. Bevorzugt ist bei Festlegung auf ein bestimmtes Maß der Toleranzbereich bereits dann überschritten, wenn nur einer der beiden horizontal beabstandeten Näherungssensoren eine Überschreitung erfasst, so dass eine Überschreitung des Toleranzbereichs entweder durch eine geradlinige Entfernung der Ladeeinheit quer zur Erstreckungsebene der Toröffnung eintreten kann, wodurch beide Näherungssensoren im Wesentlichen gleichzeitig ein Verlassen des Toleranzbereichs erfassen, oder aber durch eine bogenförmige Bewegung der Ladeeinheit, bei der der Toleranzbereich (zunächst) nur im Bereich eines Näherungssensors überschritten wird, im Bereich des anderen Näherungssensors dagegen (noch) nicht.

Der Toleranzbereich kann in horizontaler Richtung und parallel zu einer Erstreckungsebene der Toröffnung bzw. des Ladetors bis zu 50 mm, 100 mm, 150 mm, 200 mm oder auch mehr betragen.

Der Toleranzbereich kann in vertikaler Richtung, parallel zu einer Erstreckungsebene der Toröffnung bzw. des Ladetors, bis zu 30 mm, 50 mm, 100 mm oder 150 mm betragen. Auch in diesem Fall gilt, dass eine Überschreitung des Toleranzbereichs bereits dadurch erfolgen kann, dass sich die Ladeeinheit im Bereich nur eines Näherungssensors aus dem Toleranzbereich bewegt, etwa aufgrund einer übermäßigen seitlichen Neigung der Ladeeinheit.

Es kann vorgesehen sein, dass die Ladetorsteuerung einen Ladetorantrieb zum motorischen Öffnen oder Schließen des Ladetors aufweist und eine Öffnungsbetätigung des Ladetorantriebs nur zulässt, wenn die Näherungssensoren eine Position der Ladeeinheit innerhalb des Toleranzbereichs erfassen. Dadurch ist sichergestellt, dass sich das geschlossene Ladetor nur dann öffnen lässt, wenn beide Näherungssensoren eine Position der Ladeeinheit innerhalb des Toleranzbereichs erfassen, d.h. wenn eine Ladeeinheit ordnungsgemäß an die Laderampe gestellt ist.

Alternativ oder auch zusätzlich kann die Ladetorsteuerung eine Ladetorverriegelung zum Verriegeln des Ladetors in der geschlossenen Stellung aufweisen, mit manueller oder motorischer Öffnungs- und Schließbetätigung des Ladetors, wobei die Ladetorverriegelung von der Steuerung nur dann freigebbar ist, wenn die Näherungssensoren eine Position einer Ladeeinheit innerhalb des Toleranzbereichs erfassen.

Das Warnsignal kann von einer mit der Steuerung verbundenen Warn- oder Signaleinrichtung optisch und/oder akustisch und/oder als Funksignal ausgebbar sein, so dass das Warnsignal zusätzlich zur Warnfunktion vor Ort beispielsweise an eine Zentrale geleitet werden kann, wo bei Bedarf zusätzliche Maßnahmen ergriffen werden können.

Die Warneinrichtung kann eine ein- oder mehrfarbige Warnlampe oder Ampel umfassen, die über der Rangierfläche angebracht oder teilweise oder bündig in die Rangierfläche eingelassen ist.

Es kann vorgesehen sein, dass die Steuerung über die Warneinrichtung ein erstes Warnsignal ausgibt, wenn bei nicht geschlossenem Tor von einem ersten Näherungssensor ein Verlassen des Toleranzbereichs durch die Ladeeinheit erfasst wird, nicht dagegen von einem zweiten Näherungssensor. Entsprechend kann vorgesehen sein, dass die Steuerung über die Warneinrichtung ein zweites Warnsignal ausgibt, wenn bei nicht geschlossenem Tor von einem zweiten Näherungssensor ein Verlassen des Toleranzbereichs durch die Ladeeinheit erfasst wird, nicht dagegen von einem ersten Näherungssensor. Beispielsweise kann so gemäß der Erfindung ein "linkes" und ein "rechtes" Warnsignal ausgegeben werden.

Es kann vorgesehen sein, dass die Steuerung über die Warneinrichtung ein drittes Warnsignal ausgibt, wenn bei nicht geschlossenem Tor von beiden Näherungssensoren ein Verlassen des Toleranzbereichs durch die Ladeeinheit erfasst wird. Das dritte Warnsignal kann beispielsweise lauter, andersfarbig, heller oder in anderer Weise intensiver als die ersten und zweiten Warnsignale sein.

Es kann vorgesehen sein, dass die Steuerung über die Warneinrichtung ein viertes Warnsignal ausgibt, wenn bei geschlossenem Tor von mindestens einem Näherungssensor ein Verlassen des Toleranzbereichs durch die Ladeeinheit oder ein Nichtvorhandensein einer Ladeeinheit innerhalb des Toleranzbereichs erfasst wird. Eine solche Situation ist zwar normalerweise unproblematisch, da davon auszugehen ist, dass der Wechselbehälter gefahrlos abgezogen werden kann, kann aber für den Fahrer eines den Wechselbehälter transportierenden Fahrzeugs eine Rangierhilfe darstellen, um den Wechselbehälter ordnungsgemäß vor dem Ladetor zu positionieren. Ein solches viertes Warnsignal kann eine geringere Intensität als die anderen Warnsignale aufweisen und beispielsweise als einfache Anzeige oder Meldung dargestellt werden.

Es kann vorgesehen sein, dass jeweils ein Näherungssensor in ein Anschlagelement der Laderampe, beispielsweise einen Anschlagpuffer aus einem elastischen Material, integriert ist.

Weiterhin können die Näherungssensoren zur Erfassung von seitlichen Rahmen- oder Wandelementen einer Ladeeinheit ausgebildet sein, beispielsweise zur Erfassung von senkrechten oder horizontalen Rahmenteilen, die eine Ladeöffnung der Ladeeinheit, bspw. eines LKW oder Wechselbehälters, umschließen.

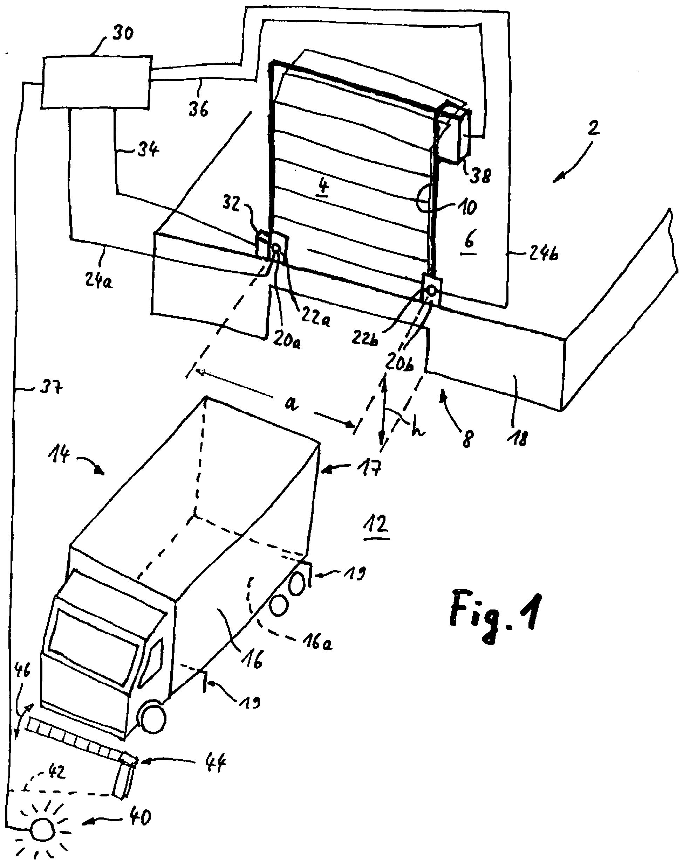

Die Erfindung wird nachfolgend anhand eines Ausführungsbeispiels erläutert, wobei auf eine Zeichnung Bezug genommen wird, in der
Fig. 1 eine schematisierte, perspektivische Ansicht einer Ladestation für Ladeeinheiten wie Wechselbehälter zeigt.

Fig. 1 zeigt stark schematisiert eine Ladestation 2 für Ladeeinheiten wie Wechselbehälter, mit einem zu öffnenden oder zu schließenden Ladetor 4, das oberhalb einer horizontalen Ladefläche 6 einer Laderampe 8 angeordnet ist. Das Ladetor ist in dem dargestellten Beispiel aus einer Reihe von Faltsegmenten zusammengesetzt und innerhalb einer Toröffnung 10 in vertikaler Richtung beweglich, so dass die Toröffnung wahlweise freigegeben oder geschlossen werden kann.

Vor der Ladestation 2 befindet sich eine Rangierfläche 12, auf der zu be- oder entladende Ladeeinheiten abgestellt werden können, bspw. Fahrzeuge zum Transport von Wechselbehältern fahren können. In dem dargestellten Beispiel befindet sich ein Fahrzeug 14 auf der Rangierfläche 12, das mit einem Wechselbehälter 16 beladen ist, der eine Ladeöffnung 17 aufweist. Damit sich die Ladefläche 6 der Laderampe 8 auf gleicher Höhe wie eine Bodenfläche 16a des Wechselbehälters 16 befindet, besteht ein Höhenunterschied zwischen der Rangierfläche 12 und der Ladefläche 6, der beispielsweise zwischen 1 m und 1,5 m liegen kann. Die Rangierfläche 12 grenzt somit nicht unmittelbar an die Ladefläche 6, sondern darunter an einen Sockel 18 der Laderampe 8 an.

Der Wechselbehälter 16 kann in bekannter Weise auf Stützen 19 auf der Rangierfläche 12 abgestellt und das Fahrzeug 14 weggefahren werden.

Beiderseits des Ladetors 4 sind in einem gegenseitigen Abstand a von beispielsweise 2,5 m oder 3 m zwei Näherungssensoren 20a, 20b angebracht, und zwar zweckmäßigerweise auf einer gleichen Höhe h oberhalb der Rangierfläche 12. Die Näherungssensoren 20a, b können sich in gleicher Höhe wie die Ladefläche 6 befinden, oder oberhalb oder unterhalb dieser. Zweckmäßigerweise sind die Näherungssensoren 20a, b jeweils in ein Pufferelement 22a, 22b eingelassen, wobei die Pufferelemente als Anschlag für einen Wechselbehälter bei dessen Heranfahren an die Ladestation 2 dienen.

Die Näherungssensoren 20a, b sind drahtlos oder, wie dargestellt mittels Signalleitungen 24a, 24b, mit einer Steuerung 30 verbunden.

An dem Ladetor 4 befindet sich ein Schließsensor 32, der eine geschlossene Stellung des Ladetors 4 erfassen kann und drahtlos oder wie dargestellt über eine Signalleitung 34 mit der Steuerung 30 verbunden ist.

Die Steuerung 30 ist weiterhin drahtlos oder mittels einer Signalleitung 36 mit einem Ladetorantrieb 38 verbunden, der eine Ladetorsteuerung bildet und von der Steuerung 30 auf ein entsprechendes Signal hin betätigt werden kann, sofern beide Näherungssensoren 20a, b das Vorhandensein eines Wechselbehälters innerhalb eines festgelegten Toleranzbereichs erfassen, also wenn sich ein Wechselbehälter innerhalb einer zulässigen, vorab festgelegten Maßtoleranz bezüglich des Ladetors 4 in einer Ladeposition vor dem Ladetor 4 befindet. Alternativ, beispielsweise bei einem manuell zu betätigenden Ladetor 4 oder gegebenenfalls auch zusätzlich, kann anstelle des Ladetorantriebs 38 eine Ladetorverriegelung als Ladetorsteuerung vorgesehen sein, die anstelle einer Betätigung eines Ladetorantriebs von der Steuerung 30 freizugeben ist, um eine Öffnung des Ladetors 4 zu ermöglichen.

Weiterhin ist die Steuerung 30 über eine Signalleitung 37 mit einer Warn- oder Signaleinrichtung 40 verbunden, die beispielsweise nach Art einer Lichtzeichenanlage oberhalb der Rangierfläche 18 aufgehängt oder in diese eingelassen sein kann. Alternativ oder zusätzlich zu der Warneinrichtung 40 ist die Steuerung 30 mit einer Wegfahrsperre der Ladeeinheit verbunden, die in diesem Beispiel als Schranke 44 ausgeführt ist, welche in einer Schwenkrichtung 46 geöffnet oder geschlossen werden kann.

Die Steuerung ist so eingerichtet, dass sich das Ladetor 4 nur öffnen lässt, sei es durch Freigabe einer Ladetorverriegelung oder durch Öffnungsbetätigung des Ladetorantriebs 38, wenn beide Näherungssensoren 20a, b das Vorhandensein eines Wechselbehälters innerhalb des festgelegten Toleranzbereichs erfassen, d.h. wenn ein Wechselbehälter korrekt angestellt ist.

Bei einer Veränderung der Position des Wechselbehälters aufgrund einer vorzeitigen, versehentlichen oder unerlaubten Entfernung von der Laderampe bei geöffnetem Ladetor 4 kann ein Näherungssensor oder können beide Näherungssensoren 20a, b eine Entfernung des Wechselbehälters aus dem Toleranzbereich erfassen, was die Steuerung 30 dazu veranlasst, über die Warneinrichtung 40 ein Warnsignal auszugeben und/oder die Wegfahrsperre zu aktivieren, bspw. die Schranke 44 zu schließen. Bei Erfassung eines Verlassens des Toleranzbereichs durch beide Näherungssensoren kann beispielsweise ein rotes Lichtsignal ausgegeben werden oder es kann ein Wechsel von einem grünen zu einem roten Lichtsignal erfolgen.

Die Steuerung ist erfindungsgemäß so eingerichtet, dass ein Verlassen des Toleranzbereichs des Wechselbehälters an der einen oder anderen Seite des Ladetors 4 unterschieden wird und ein linkes oder ein rechtes Warnsignal ausgegeben wird, wenn der Wechselbehälter nur auf einer Seite fehlerhaft positioniert ist ( ein erstes Warnsignal bei nicht geschlossenem Tor und Erfassung einer fehlerhaften Position durch einen ersten Näherungssensor, und ein unterschiedliches zweites Warnsignal bei nicht geschlossenem Tor und Erfassung einer fehlerhaften Position durch einen zweiten Näherungssensor, somit "linkes" und "rechtes" Warnsignal möglich, etwa als gelbes und oranges Lichtsignal). Alternativ, jedoch nicht erfindungsgemäß, kann ein einheitliches Signal erzeugt werden, wenn nur einer der Näherungssensoren ein Verlassen des Tole-ranzbereichs erfasst, beispielsweise ein gelbes Lichtsignal, oder für jeden Fall des Erfassens des Verlassens des Toleranzbereichs, ob durch einen oder beide Näherungssensoren, stets ein und dasselbe Warnsignal erzeugt werden, beispielsweise ein rotes Lichtsignal.

Weiterhin besteht die Möglichkeit, dass die Steuerung 30 bzw. die Warneinrichtung 40 so eingerichtet ist, dass sie bei geschlossenem Ladetor 4 ein drittes oder viertes oder ein einheitliches fünftes Warnsignal ausgibt, wenn bei geschlossenem Ladetor 4 einer der beiden Näherungssensoren 20a, b oder beide gleichzeitig ein Verlassen des Toleranzbereichs durch den Wechselbehälter erfassen, also wenn der Wechselbehälter nicht korrekt positioniert ist. Da es sich in einem solchen Fall in der Regel nicht um eine Gefahrensituation handelt, genügt die Ausgabe einer Meldung, beispielsweise in Form eines weniger auffälligen Schall- oder Lichtsignals.

Die Steuerung 30 kann nicht nur zur Erzeugung eines Warnsignals durch eine Warneinrichtung eingerichtet sein, sondern nach Bedarf mit mehreren beispielsweise optischen und/oder akustischen Warneinrichtungen verbunden sein, die sich entweder im Bereich der Rangierfläche 12 befinden können oder aber in einem den Wechselbehälter 16 transportierenden Fahrzeug 14. Zusätzlich könnte eine Bedienungsperson der Ent-/Beladevorrichtung optisch oder akustisch gewarnt werden, beispielsweise über Headset, Wearables, Warnlampen oder akustische Warneinrichtungen in der Nähe des jeweiligen Ladetors 4.

Die Warnfunktion der Ladestation ist unabhängig von der Art des Fahrzeugs, mit dem ein Wechselbehälter an- und abtransportiert wird, und es ist keine Umrüstung von Fahrzeugen erforderlich. Auch ist keine Umrüstung von Wechselbehältern notwendig. Weiterhin ist die Warnfunktion unabhängig davon, ob das Fahrzeug während eines Ent- oder Beladevorgangs unter dem Wechselbehälter verbleibt oder zwischendurch wegfährt oder durch ein anderes Fahrzeug ersetzt wird.

Die Vorrichtung kann auch zur Überwachung der Anstellposition einer Ladeeinheit oder eines Fahrzeugs wie LKW, Anhänger oder Trailer verwendet werden.

### Bezugszeichenliste

- 2: Ladestation
- 4: Ladetor
- 6: Ladefläche
- 8: Laderampe
- 10: Toröffnung
- 12: Rangierfläche
- 14: Fahrzeug
- 16: Wechselbehälter (Ladeeinheit)
- 16a: Bodenfläche
- 17: Ladeöffnung
- 18: Sockel
- 19: Stütze
- 20a, b: Näherungssensor
- 22a, b: Puffer (Anschlagelement)
- 24a, b: Signalleitung
- 30: Steuerung
- 32: Schließsensor
- 34, 36, 37: Signalleitung
- 38: Ladetorantrieb (Ladetorsteuerung)
- 40: Warneinrichtung
- 42: Signalleitung
- 44: Schranke (Wegfahrsperre)
- 46: Schwenkrichtung
- a: Abstand
- h: Höhe

## Patentansprüche

1. Ladestation (2) zum Be- oder Entladen von Ladeeinheiten (16), mit einem zu öffnenden oder zu schließenden Ladetor (4), das oberhalb einer horizontalen Ladefläche (6) einer Laderampe (8) angeordnet ist und in einer geöffneten Stellung eine Toröffnung (10) freigibt, mit einer an die Laderampe (8) angrenzenden Rangierfläche (12), auf der eine Ladeeinheit (16) abstellbar ist, wobei an dem Ladetor (4) ein Schließsensor (32) angeordnet ist, mit dem eine geschlossene Stellung des Ladetors (4) erfassbar ist, dass an der Laderampe (8) in einem horizontalen Abstand (a) voneinander zwei Näherungssensoren (20a, b) angeordnet sind, die bei Positionierung einer Ladeeinheit (16) benachbart zu der Toröffnung (10) eine Erfassung zulassen, ob sich die Ladeeinheit (16) mit einer Ladeöffnung (17) innerhalb eines festgelegten Toleranzbereichs relativ zu der Toröffnung (10) befindet, und dass die Näherungssensoren (20a, b), der Schließsensor (32) und eine Ladetorsteuerung (38) mit einer Steuerung (30) verbunden sind, die mit einer Warn- oder Signaleinrichtung (40) verbunden ist und eine Öffnung des Ladetors (4) über die Ladetorsteuerung (38) nur zulässt, wenn die Näherungssensoren (20a, b) eine Position der Ladeeinheit (16) innerhalb des Toleranzbereichs erfassen, **dadurch gekennzeichnet, dass** die Steuerung (30) so eingerichtet ist, dass ein Verlassen des Toleranzbereichs des Wechselbehälters an der einen oder anderen Seite des Ladetors (4) unterschieden wird und ein linkes oder rechtes Warnsignal ausgegeben wird, wenn der Wechselbehälter nur auf einer Seite fehlerhaft positioniert ist, wobei ein erstes Warnsignal bei nicht geschlossenem Tor und Erfassung einer fehlerhaften Position durch einen ersten Näherungssensor (20a) ausgegeben wird, und ein unterschiedliches zweites Warnsignal bei nicht geschlossenem Tor und Erfassung einer fehlerhaften Position durch einen zweiten Näherungssensor (20b) ausgegeben wird.

2. Ladestation nach Anspruch 1, **gekennzeichnet durch** optische, induktive, mit Ultraschall arbeitende oder mit mechanischen Tastern oder Schaltern versehene Näherungssensoren (20a, b).

3. Ladestation nach einem der vorangehenden Ansprüche, **dadurch gekennzeichnet, dass** der Toleranzbereich senkrecht zu einer Erstreckungsebene des Ladetors (4) bis zu 10 mm, 20 mm, 30 mm, 50 mm oder 100 mm beträgt.

4. Ladestation nach einem der vorangehenden Ansprüche, **dadurch gekennzeichnet, dass** der Toleranzbereich in horizontaler Richtung und parallel zu einer Erstreckungsebene des Ladetors (4) bis zu 50 mm, 100 mm, 150 mm oder 200 mm beträgt.

5. Ladestation nach einem der vorangehenden Ansprüche, **dadurch gekennzeichnet, dass** der Toleranzbereich in vertikaler Richtung bis zu 30 mm, 50 mm, 100 mm oder 150 mm beträgt.

6. Ladestation nach einem der vorangehenden Ansprüche, **dadurch gekennzeichnet, dass** die Ladetorsteuerung (38) einen Ladetorantrieb und/oder eine Ladetorverriegelung zum Verriegeln des Ladetors (4) in der geschlossenen Stellung aufweist.

7. Ladestation nach einem der vorangehenden Ansprüche, **dadurch gekennzeichnet, dass** mit der Wam-oder Signaleinrichtung (40) jedes Warnsignal optisch, akustisch oder als Funksignal ausgebbar ist.

8. Ladestation nach Anspruch 7, **dadurch gekennzeichnet, dass** die Warn- oder Signaleinrichtung (40) eine Warnlampe umfasst, die über der Rangierfläche (12) angebracht oder in die Rangierfläche (12) ganz oder teilweise eingelassen ist.

9. Ladestation nach einem der vorangehenden Anspruche, **dadurch gekennzeichnet, dass** jeweils ein Näherungssensor (20a, b) in ein Anschlagelement (22a, b) der Laderampe (8) integriert ist.

10. Ladestation nach einem der vorangehenden Ansprüche, **dadurch gekennzeichnet, dass** die Näherungssensoren (20a, b) zur Erfassung von seitlichen, die Ladeöffnung (17) umschließenden Wand- oder Rahmenelementen einer Ladeeinheit (16) ausgebildet sind.

## Claims

1. Load station (2) for loading or unloading loading units (16), comprising a loading gate (4) to be opened or closed, which is arranged above a horizontal load face (6) of a loading ramp (8) and in an opened position releases a gate opening (10), comprising a manoeuvring area (12) which abuts on the loading ramp (8) and where a loading unit (16) can be set down, a closing sensor (32), by which a closed position of the loading gate (4) can be detected, being arranged on the loading gate (4), two proximity sensors (20a, b) being arranged on the loading ramp (8) at a horizontal distance (a) from each other, which when the loading unit (16) is positioned adjacent to the gate opening (10) permit it to be detected whether the loading unit (16) having a load opening (17) is located within a defined range of tolerance relative to the gate opening (10); said proximity sensors (20a, b), said closing sensor (32) and a loading gate controller (38) being connected to a control unit (30), which is connected to a warning or signalling device (40) and only permits the loading gate (4) to be opened via the loading gate controller (38) whenever the proximity sensors (20a, b) detect that the loading unit (16) is positioned within the range of tolerance, **characterised in that** the control unit (30) is designed so that departure by the swap body container from the range of tolerance is differentiated on one or other side of the loading gate (4) and a left or right warning signal is emitted, if the swap body container is incorrectly positioned on only one side, whereby in the event of the gate not being closed and an incorrect position being detected through a first proximity sensor (20a), a first warning signal is emitted and, in the event of the gate not being closed and an incorrect position being detected through a second proximity sensor (20b), a different second warning signal is emitted.

2. Load station according to claim 1, **characterized by** proximity sensors (20a, b) working optically, inductively or ultrasonically or provided with mechanical keys or switches.

3. Load station according to any one of the above claims, **characterized in that** the range of tolerance perpendicular to an extension plane of the loading gate (4) is up to 10 mm, 20 mm, 30 mm, 50 mm or 100 mm.

4. Load station according to any one of the above claims, **characterized in that** the range of tolerance in the horizontal direction and parallel to an extension plane of the loading gate (4) is up to 50 mm, 100 mm, 150 mm or 200 mm.

5. Load station according to any one of the above claims, **characterized in that** the range of tolerance in the vertical direction is up to 30 mm, 50 mm, 100 mm or 150 mm.

6. Load station according to any one of the above claims, **characterized in that** the loading gate controller (38) has a loading gate drive and/or a loading gate bolting device to lock the loading gate (4) in the closed position.

7. Load station according to any one of the above claims, **characterized in that** each warning signal can be emitted optically, acoustically or as a radio signal by the warning or signalling device (40).

8. Load station according to claim 7, **characterized in that** the warning or signalling device (40) comprises a warning lamp, which is attached over the manoeuvring area (12) or totally or partially embedded in the manoeuvring area (12).

9. Load station according to any one of the above claims, **characterized in that** a proximity sensor (20a, b) is integrated into a stop element (22a, b) of the loading ramp (8) in each case.

10. Load station according to any one of the above claims, **characterized in that** the proximity sensors (20a, b) are configured to detect lateral panel or frame elements of a loading unit (16) enclosing the load opening (17).

## Revendications

1. Poste de chargement (2) pour le chargement ou le déchargement de groupes de chargement (16) et comportant un portail de chargement (4) à ouvrir ou à fermer, qui est disposé au-dessus d'une face horizontale de chargement (6) d'une rampe de chargement (8) et qui, en position ouverte, libère une ouverture de portail (10), comportant une zone de manoeuvre (12) qui vient buter contre la rampe de chargement (8) et où un groupe de chargement (16) peut être implanté, un capteur de fermeture (32), qui permet de détecter la position fermée du portail de chargement (4), disposé sur le portail de chargement (4), deux capteurs de proximité (20a, b) disposés sur la rampe de chargement (8), à une distance (a) l'un de l'autre, sur le plan horizontal, de telle sorte que, lorsque le groupe de chargement (16) se situe juste à côté de l'ouverture du portail (10), cela permet de déterminer si le groupe de chargement (16) qui a une ouverture de charge (17) se situe dans une plage définie de tolérances par rapport à l'ouverture du portail (10) ; lesdits capteurs de proximité (20a, b), ledit capteur de fermeture (32) et un régulateur de portail de chargement (38) sont reliés à un groupe de commande (30), qui est lui-même raccordé à un dispositif de mise en garde ou de signalisation (40) et permet l'ouverture du portail de chargement (4) via le régulateur de portail de chargement (38) uniquement lorsque les capteurs de proximité (20a, b) détectent que le groupe de chargement (16) est positionné dans la plage de tolérances, et qui se **caractérise par le fait que** le groupe de commande (30) est conçu de telle sorte que tout écart par le conteneur du corps à caisse mobile s'écarte de la plage de tolérances et se différencie sur un côté ou l'autre du portail de chargement (4) et un message de mise en garde gauche ou droit est émis si ce conteneur à caisse mobile occupe une position incorrecte sur un seul côté, et, dans un tel cas, si le portail n'est pas fermé et si une position incorrecte est détectée par un premier capteur de proximité (20a), un premier signal de mise en garde est émis et, si le portail n'est pas fermé et une position incorrecte est détectée par un deuxième capteur de proximité (20b), un deuxième signal différent de mise en garde est émis.

2. Le poste de chargement décrit dans la réclamation 1, si ce n'est que les capteurs de proximité (20a, b) ont un fonctionnement optique, inductif ou ultrasonique ou sont équipés de clavettes mécaniques ou de contacteurs.

3. Le poste de chargement décrit dans l'une ou l'autre des réclamations précédentes, si ce n'est que la plage de tolérances perpendiculaire à un plan rallonge du portail de chargement (4) peut atteindre un maximum de 10, 20, 30, 50 ou 100 mm.

4. Le poste de chargement décrit dans l'une ou l'autre des réclamations précédentes, si ce n'est que la plage de tolérances dans le sens horizontal et parallèlement à un plan rallonge du portail de chargement (4) peut atteindre un maximum de 50,100,150 ou 200 mm.

5. Le poste de chargement décrit dans l'une ou l'autre des réclamations précédentes, si ce n'est que la plage de tolérances dans le sens vertical peut atteindre un maximum de 30, 50, 00 ou 150 mm.

6. Le poste de chargement décrit dans l'une ou l'autre des réclamations précédentes, si ce n'est que le régulateur du portail de chargement (38) a un dispositif d'entraînement de portail de chargement et (ou) un dispositif de boulonnage de portail de chargement pour verrouiller le portail de chargement (4) en position fermée.

7. Le poste de chargement décrit dans l'une ou l'autre des réclamations précédentes, si ce n'est que chaque signal de mise en garde peut être émis de manière optique ou acoustique ou sous la forme d'un signal radio par le dispositif de mise en garde ou de signalisation (40).

8. Le poste de chargement décrit dans la réclamation 7, si ce n'est que le dispositif de mise en garde ou de signalisation (40) comporte un témoin lumineux d'avertissement qui vient se fixer au-dessus de la zone de manoeuvre (12) ou est totalement ou partiellement encastré dans la zone de manoeuvre (12).

9. Le poste de chargement décrit dans l'une ou l'autre des réclamations précédentes, si ce n'est qu'un capteur de proximité (20a, b) est intégré à un élément d'arrêt (22a, b) de la rampe de chargement (8) dans chaque cas.

10. Le poste de chargement décrit dans l'une ou l'autre des réclamations précédentes, si ce n'est que les capteurs de proximité (20a, b) sont configurés en vue de détecter les éléments des panneaux latéraux ou du cadre d'un groupe de chargement (16) englobant l'ouverture de la charge (17).
